# DEMANDE DE BREVET EUROPEEN

(11) **EP 2 101 086 A1**
(43) Date de publication de la demande: **16.09.2009**
(21) Numéro de dépôt: 09154497.3
(22) Date de dépôt: 06.03.2009
(51) Int. Cl.: F16H 59/02

(54) **Dispositif de sélection de vitesse et de changement de mode de fonctionnement dans une transmission par l'utilisation de palettes au volant pour un véhicule automobile**

(30) Priorité: 13.03.2008 FR 0851628
(71) Demandeur: Peugeot Citroën Automobiles SA, 78140 Vélizy-Villacoublay (FR)
(72) Inventeur: Chariou, Hervé, 78220, VIROFLAY (FR)

(57) **Abrégé**

Dispositif de sélection de vitesse et de changement de mode de fonctionnement dans une transmission par l'utilisation de palettes au volant pour un véhicule automobile.

Ce dispositif est caractérisé en ce que le changement de mode de fonctionnement est obtenu en plaçant simultanément les deux palettes en position d'activation.

L'invention concerne aussi un levier de vitesses avec un tel dispositif et une unité de transmission présentant un tel dispositif de sélection ou un tel levier de vitesses.

Applications aux véhicules automobiles, notamment mais pas exclusivement, avec une unité de transmission comprenant une boîte de vitesses automatique ou une boîte de vitesses mécanique pilotée.

## Description

La présente invention concerne d'une façon générale un dispositif de sélection de vitesse et de changement de mode de fonctionnement d'une transmission par l'utilisation de palettes au volant pour un véhicule automobile.

Plus particulièrement, la présente invention concerne le domaine des transmissions, notamment mais pas exclusivement avec une boîte de vitesses mécanique pilotée (BVMP) ou une boîte de vitesse automatique (BVA), avec une interface de commande par levier et par commandes au volant autrement appelées palettes.

Avec une telle transmission, le conducteur dispose de plusieurs choix de modes de conduite :
- un mode manuel pour lequel il conserve la maîtrise des changements de rapport de boîte de vitesses en utilisant les palettes situées derrière le volant ou le levier de vitesses,
- un mode automatisé pour lequel la sélection des vitesses est entièrement gérée par un calculateur qui détermine le rapport de démultiplication optimal par rapport aux conditions de conduite.

A tout moment, le conducteur a la possibilité de basculer d'un mode à l'autre en fonction de ses envies et des conditions de l'environnement rencontré, par exemple route, autoroute, ville ou embouteillage.

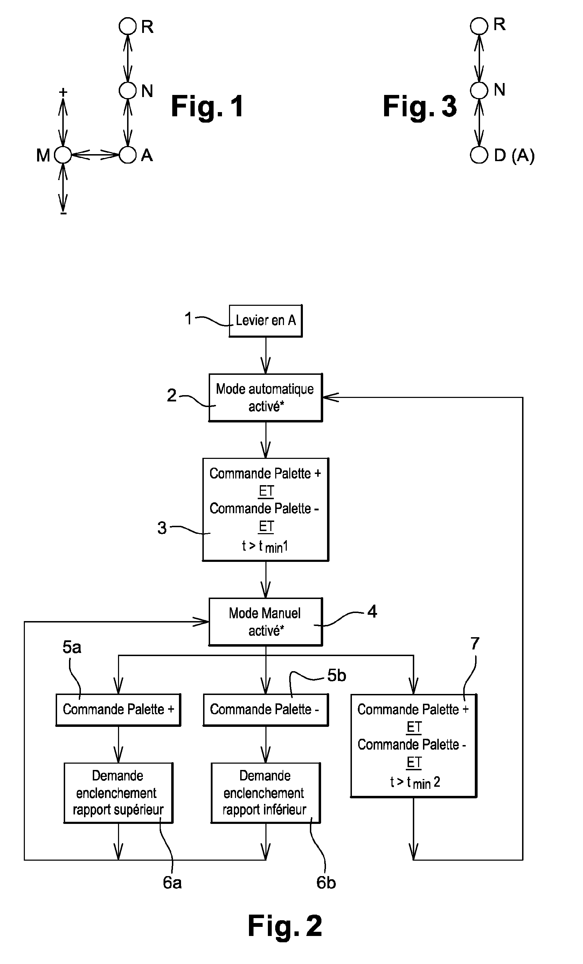

En général, la grille de changement de vitesses du levier de vitesses indique au conducteur différentes positions différenciées par des lettres : A pour mode automatique, M pour mode manuel avec de part et d'autre de celui-ci les signes M+ pour enclencher le rapport supérieur et M- pour enclencher le rapport inférieur. Une telle grille connue d'un levier de vitesses est montrée à la figure 1.

Pour une telle grille, le mode par défaut est le mode automatique. Le basculement en mode manuel se fait en déplaçant le levier en position M puis en activant les commandes M+ d'augmentation de rapport ou M- de diminution de rapport au levier de vitesses ou par les palettes disposées derrière le volant ou solidaires de celui-ci en activant la palette + d'augmentation de rapport ou la palette - de diminution de rapport. Le retour en mode automatique se fait en remettant le levier de changement de vitesses en mode automatique indiqué par A.

Si le conducteur, en mode automatique, souhaite temporairement reprendre le contrôle de la sélection de vitesse et annuler ce mode automatique, par exemple pour un dépassement, il peut le faire de manière immédiate. Il lui suffit d'actionner une des palettes correspondant à une palette + ou une palette - et sa demande est prise en compte par la boîte de vitesses. Après un court laps de temps, sans nouvelle action de sa part, la gestion automatique des rapports est réactivée.

Si le conducteur, en mode automatique, souhaite passer en mode manuel de façon permanente, il doit mettre le levier de vitesses en mode manuel indiqué par M et utiliser soit ce levier de vitesses soit les palettes au volant pour enclencher un rapport supérieur ou inférieur.

Cette logique de changement présente cependant de nombreux inconvénients dont le principal se situe dans la complexité du levier de vitesses et dans le manque d'ergonomie de l'ensemble.

Une première solution connue de l'état de la technique consiste à ajouter une commande par bouton impulsionnel. Un tel bouton n'est ni intuitif ni facile à manipuler pour le conducteur car celui-ci doit le localiser tout en conduisant. De plus, cela nécessite une acquisition spécifique par un calculateur et un faisceau additionnel entre le calculateur et le bouton. Enfin, cela peut être source de désagrément, le conducteur pouvant activer par erreur le mode manuel et se plaindre du comportement du véhicule qui est alors perçu comme dégradé.

Une seconde solution est illustrée par le document EP-B-1 180 618. Ce document présente un dispositif de changement de vitesse au volant comprenant deux palettes situées de chaque côté du volant. Chaque palette a deux positions de fonctionnement et une position de repos. La combinaison de la seconde position de fonctionnement de la première palette et de la position de repos de la seconde palette provoque le déclenchement du mode de fonctionnement automatique de la transmission ainsi commandée. Dans ce document, les palettes sont donc à trois positions de fonctionnement ce qui implique une action différente respective pour chaque type d'activation souhaité de la palette, par exemple une action de poussée sur la palette pour une première commande et une action de traction sur cette palette pour une autre seconde commande. Ce système est compliqué de fabrication comme de manipulation par le conducteur. Il demande aussi un changement du type de palettes utilisées pour la sélection du rapport de vitesse, ces palettes étant en général du type à deux positions, ce qui implique des adaptations spécifiques sur le dispositif de sélection de vitesse au volant pour pouvoir lui faire effectuer des changements de mode de fonctionnement.

La présente invention a pour but d'obtenir, dans un dispositif de sélection de vitesse au volant, une nouvelle commande de changement de mode de fonctionnement de la transmission, ceci étant effectué par les commandes de sélection de vitesse sans changement important ou ajout d'éléments sur ce dispositif.

La présente invention a aussi pour but de simplifier le levier de vitesses associé à un tel dispositif de sélection de vitesse et de changement du mode de fonctionnement au volant.

A cet effet, l'invention a pour objet un dispositif de sélection de vitesse et de changement de mode de fonctionnement entre un mode manuel et un mode automatique et inversement pour une unité de transmission automatique comprenant une boîte de vitesses, dans lequel dispositif la sélection de vitesse en mode manuel peut être actionnée soit par une palette de passage de vitesse supérieure ou une palette de passage de vitesse inférieure, ces palettes étant disposées derrière le volant ou solidaires de celui-ci, chacune de ces palettes étant mobile entre seulement deux positions, respectivement une position de repos et une position d'activation pour la sélection de vitesse **caractérisé en ce que** le changement de mode de fonctionnement est obtenu en plaçant simultanément les deux palettes en position d'activation.

Selon des caractéristiques additionnelles de la présente invention :
- la position d'activation de la palette est obtenue par poussée, pivotement ou par traction sur celle-ci,
- les palettes sont disposées diamétralement opposées de chaque côté du volant ou derrière celui-ci,
- quand le mode de fonctionnement est le mode automatique, le passage en mode manuel se fait par activation simultanée des deux palettes pendant une première durée prédéterminée, le retour en mode automatique à partir du mode manuel se faisant après activation simultanée des deux palettes pendant une seconde durée prédéterminée,
- au moins lors du changement de mode de fonctionnement ou juste après celui-ci, le mode de fonctionnement actif est signalé au conducteur par un moyen sonore et/ou visuel,
- au moins un afficheur indique le mode de fonctionnement actuel et le rapport de vitesse engagé,
- l'activation simultanée des deux palettes est transmise à un calculateur de même que la durée d'activation simultanée de celles-ci pour la détermination du mode de fonctionnement choisi par le conducteur.

L'invention concerne également un levier de vitesses avec une grille de sélection pour l'accès à plusieurs modes de fonctionnement **caractérisé en ce qu**'il est associé à un tel dispositif de sélection de vitesse et de changement de mode de fonctionnement.

Avantageusement, le levier de vitesses présente une grille à trois positions : une position de marche arrière, une position neutre et une position en marche avant correspondant à un mode automatique ou à un mode manuel.

En alternative, le levier de vitesses peut présenter une grille à quatre positions : une position de marche arrière, une position neutre, une position en marche avant correspondant à un mode automatique ou à un mode manuel et une position de parking.

L'invention concerne également une unité de transmission comprenant une boîte de vitesses automatique ou une boîte de vitesses mécanique pilotée, **caractérisée en ce qu**'elle comprend un tel dispositif de sélection de vitesse et de changement de mode de fonctionnement ou un tel levier de vitesses.

L'invention concerne également un véhicule automobile, **caractérisé en ce qu**'il comprend une telle unité de transmission.

L'effet technique obtenu par le dispositif de sélection de vitesse et de changement de mode de fonctionnement selon la présente invention est de permettre par des éléments déjà présents pour le fonctionnement du dispositif de sélection de vitesse d'effectuer une nouvelle fonction, à savoir le changement de mode de fonctionnement de la transmission, la commande de ces éléments dans ce cas étant effectués de la même manière que pour le changement de vitesse mais simultanément, ce qui évite au conducteur de mémoriser une autre manipulation complètement différente.

L'effet technique obtenu par un levier de vitesses conformément à la présente invention est une simplification de son fonctionnement qui permet de libérer des entrées dans le calculateur associé, ces entrées pouvant être affectées à d'autres fonctions.

L'invention va maintenant être décrite plus en détail mais de façon non limitative en regard des figures annexées, dans lesquelles :
- la figure 1 représente, de manière schématique, les différentes positions du levier de vitesses d'une unité de transmission selon l'état de la technique,
- la figure 2 est un logigramme pour le changement de mode de fonctionnement de l'unité de transmission, conformément à la présente invention,
- la figure 3 représente, de manière schématique, la grille des différentes positions du levier de vitesses selon un mode de réalisation préféré de la présente invention.

La figure 1 a déjà été décrite dans la partie introductive de la présente description.

La présente invention concerne un dispositif de sélection de vitesse et de changement de mode de fonctionnement entre un mode manuel et un mode automatique et inversement pour une unité de transmission automatique comprenant une boîte de vitesses, dans lequel dispositif la sélection de vitesse en mode manuel peut être actionné par une palette de sélection de vitesse supérieure ou une palette de sélection de vitesse inférieure, ces palettes étant disposées derrière le volant ou solidaires de celui-ci, chacune de ces palettes étant mobile entre seulement deux positions, respectivement une position de repos et une position d'activation pour la sélection de vitesse, **caractérisé en ce que** le changement de mode de fonctionnement est obtenu en plaçant simultanément les deux palettes en position d'activation.

Ainsi deux éléments, c'est-à-dire les palettes de sélection de vitesse, déjà prévus sur ce dispositif de sélection de vitesse servent aussi au changement du mode de fonctionnement, ce qui représente une simplification du dispositif de l'art antérieur avec l'ajout d'un bouton de changement de mode.

Comme précédemment indiqué, les palettes de sélection de vitesse sont des palettes à deux positions : une position de repos et une position d'activation pour la sélection d'un rapport supérieur ou inférieur selon la fonction de la palette concernée. La présente invention ne demande pas le rajout d'une autre position d'activation de la palette mais seulement l'activation simultanée des deux palettes ce qui est un avantage de construction et un avantage ergonomique pour le conducteur en simplifiant les processus d'activation des palettes.

Ces palettes sont fixées sur le volant ou derrière le volant, se trouvant avantageusement en position sans braquage des roues du volant à mi-hauteur de celui-ci. Il peut ainsi être fait référence à une palette droite et une palette gauche, la palette droite servant généralement pour l'augmentation du rapport de vitesse sans que cela soit exclusif.

Le conducteur en roulant peut ainsi basculer d'un mode de fonctionnement à l'autre sans jamais quitter les mains du volant, le levier de vitesses restant dans la même position comme il sera vu pour la figure 3, montrant un mode de réalisation préférentiel de ce levier de vitesses.

Comme déjà mentionné pour l'état de la technique, le mode par défaut reste le mode automatique. Cependant, de façon temporaire, le conducteur peut toujours quitter le mode automatique pour reprendre la main de façon temporaire sur le mode automatique. Il lui suffit d'actionner l'une des palettes et sa demande est prise en compte. Ceci correspond seulement à un changement de mode de fonctionnement temporaire et après un court laps de temps, sans nouvelle action de la part du conducteur, le mode automatique sera de nouveau prioritaire et rétabli.

Pour un changement de mode de fonctionnement plus prolongé, la demande du conducteur de changement de mode de conduite du mode automatique en mode manuel est reconnue, selon la présente invention, par une activation simultanée des palettes droite et gauche.

La figure 2 montre un logigramme de changement de mode de fonctionnement à la base de la présente invention.

Avec un levier de vitesses en mode automatique A, le mode automatique est le mode présentement activé et utilisé comme montré en 1 et 2.

Pour changer de mode de fonctionnement, le conducteur, sans quitter les mains du volant car les palettes d'augmentation et de diminution de rapport sont à proximité de celui-ci, effectue une action d'activation simultanée des deux palettes, montrée en 3. Cette action d'activation peut être une poussée sur les deux palettes, une traction de celles-ci ou un pivotement de celles-ci. Elle est la même pour une palette respective que pour la sélection d'une vitesse supérieure ou inférieure selon que cette palette est une palette de sélection de vitesse supérieure ou une palette de sélection de vitesse inférieure. Elle concerne cependant les deux palettes simultanément. L'activation par traction sur la palette ou par pivotement de cette palette est souvent préférée car plus aisément réalisable par le conducteur.

L'activation simultanée des deux palettes doit être confirmée afin d'éviter qu'une activation accidentelle par le conducteur commande le passage en mode manuel. Avantageusement, il est proposé de prévoir une première durée de confirmation Tmin1 pour l'activation du mode manuel. Cette durée peut être fixée par calibration.

Avantageusement, la commande simultanée en 3 des deux palettes est reconnue par un calculateur. Ce calculateur peut être, le cas échéant, le calculateur de la boîte de vitesses automatique ou de la boîte de vitesses mécanique pilotée quand une des deux est présente dans l'unité de transmission du véhicule mais ceci n'est pas obligatoire.

Il est à noter que, si une commande simultanée de deux palettes a déjà été utilisée par certains constructeurs automobiles à vocation sportive, ceci l'a été uniquement pour passer en position neutre ou point mort à basse vitesse et non pour changer de mode de fonctionnement de l'unité de transmission.

Le mode manuel est activé en 4 après prise en compte de la commande 3 par activation simultanée des deux palettes.

Le conducteur peut alors utiliser les palettes dans leur rôle initial respectif de commande de sélection 5a de rapport supérieur ou de commande de sélection 5b de rapport inférieur. Le dispositif délivre alors une demande d'enclenchement de rapport supérieur 6a ou inférieur 6b après traitement de la commande par un calculateur.

Pour repasser en mode automatique, la commande de changement de mode de fonctionnement se fait de la même manière que la commande de changement montrée en 3. Cette commande se fait donc par activation simultanée des deux palettes comme montré en 7. Une seconde durée de confirmation Tmin2 est aussi prédéterminée pour confirmer la sortie du mode manuel et le retour au mode automatique.

Après prise en compte de la commande par un calculateur, le mode automatique est de nouveau activé comme montré en 2.

Préférentiellement, une interface visuelle et/ou sonore doit permettre au conducteur d'avoir un retour d'information sur le changement de mode, notamment lors du passage au mode manuel ou juste après ce passage.

Une interface visuelle continue est préférée. Elle peut être un afficheur passant d'un signe représentatif d'un mode automatique ou d'un mode de marche avant à un signe représentatif d'un mode manuel tout en indiquant préférentiellement le rapport engagé.

La figure 3 montre une nouvelle grille de levier de vitesses qui peut être associé au dispositif de sélection de vitesse et de changement de mode de fonctionnement selon la présente invention qui a été précédemment décrit.

Par rapport à la grille d'un levier de vitesses selon l'état de la technique montré à la figure 1, la grille du levier de vitesses, selon un mode de réalisation de la présente invention, peut être simplifié et ne présenter que trois positions : une position marche arrière R, une position neutre N et une position de marche avant A.

Cette dernière position, quand elle est dénommée A, peut amener à confusion car elle n'est pas limitée seulement au mode automatique puisque le conducteur peut se retrouver avec le levier dans cette position tout en étant en mode manuel. En effet, le mode manuel est activé par les palettes sans manoeuvre du levier de vitesses qui reste donc en position pendant le changement de mode de fonctionnement. Il peut ainsi être avantageux de signaler cette position par un autre signe comme D c'est-à-dire un rapport marche avant qu'il soit manuel ou automatique.

Le cas échéant, une position parking P, notamment pour une boîte de vitesses automatique, peut être prévue en supplément dans la grille du levier de vitesses qui comporte alors quatre positions.

Avantageusement, les changements de vitesse par le levier de vitesses peuvent aussi être supprimés ce qui permet de libérer des entrées électriques dans le calculateur associé et de simplifier considérablement la conception de la grille de ce levier de vitesses.

L'avantage de la présente invention est principalement de mettre à la disposition du conducteur une interface de changement de mode perçue par celui-ci comme intuitive tout en présentant une connotation sportive et innovante.

La simplification du levier de commande ainsi que du faisceau de connexion associé procure un gain économique pour le constructeur tout en garantissant la satisfaction du conducteur et le plaisir de la conduite.

L'invention n'est nullement limitée au mode de réalisation décrit et illustré qui n'a été donné qu'à titre d'exemple.

## Revendications

1. Dispositif de sélection de vitesse et de changement de mode de fonctionnement entre un mode manuel (M) et un mode automatique (A) et inversement pour une unité de transmission automatique comprenant une boîte de vitesses, dans lequel dispositif la sélection de vitesse en mode manuel (M) peut être actionnée soit par une palette de passage de vitesse supérieure ou une palette de passage de vitesse inférieure, ces palettes étant disposées derrière le volant ou solidaires de celui-ci, chacune de ces palettes étant mobile entre seulement deux positions, respectivement une position de repos et une position d'activation pour la sélection de vitesse **caractérisé en ce que** le changement de mode de fonctionnement est obtenu en plaçant simultanément les deux palettes en position d'activation.

2. Dispositif selon la revendication 1, **caractérisé en ce que** la position d'activation de la palette est obtenue par poussée, pivotement ou par traction sur celle-ci.

3. Dispositif selon la revendication 1 ou 2, **caractérisé en ce que** les palettes sont disposées diamétralement opposées de chaque côté du volant ou derrière celui-ci.

4. Dispositif selon l'une quelconque des revendications précédentes, **caractérisé en ce que** quand le mode de fonctionnement est le mode automatique (A), le passage en mode manuel (M) se fait par activation simultanée des deux palettes pendant une première durée prédéterminée (tmin1), le retour en mode automatique (A) à partir du mode manuel (M), se faisant après activation simultanée des deux palettes pendant une seconde durée prédéterminée (tmin2).

5. Dispositif selon l'une quelconque des revendications précédentes, **caractérisé en ce qu'**au moins lors du changement de mode de fonctionnement ou juste après celui-ci, le mode de fonctionnement actif est signalé au conducteur par un moyen sonore et/ou visuel.

6. Dispositif selon la revendication précédente, **caractérisé en ce qu'**au moins un afficheur indique le mode de fonctionnement actuel et le rapport de vitesse engagé.

7. Dispositif selon l'une quelconque des revendications précédentes, **caractérisé en ce que** l'activation simultanée des deux palettes est transmise à un calculateur de même que la durée d'activation simultanée (tmin1 ou tmin2) de celles-ci pour la détermination du mode de fonctionnement (A ou M) choisi par le conducteur.

8. Levier de vitesses avec une grille de sélection pour l'accès à plusieurs modes de fonctionnement, **caractérisé en ce qu'**il est associé à un dispositif de sélection de vitesse et de changement de mode de fonctionnement selon l'une quelconque des revendications précédentes.

9. Levier de vitesses selon la revendication précédente, **caractérisé en ce qu'**il présente une grille à trois positions : une position de marche arrière (MAR), une position neutre (N) et une position en marche avant (D) correspondant à un mode automatique (A) ou à un mode manuel (M).

10. Levier de vitesses selon la revendication 8, **caractérisé en ce qu'**il présente une grille à quatre positions : une position de marche arrière (MAR), une position neutre (N) et une position en marche avant (D) correspondant à un mode automatique (A) ou à un mode manuel (M) et une position de parking.

11. Unité de transmission comprenant une boîte de vitesses automatique ou une boîte de vitesses mécanique pilotée, **caractérisée en ce qu'**elle est comprend un dispositif de sélection de vitesse et de changement de mode de fonctionnement selon l'une quelconque des revendications 1 à 7 ou par un levier de vitesses selon l'une quelconque des revendications 8 à 10.

12. Véhicule automobile, **caractérisé en ce qu'**il comprend une unité de transmission selon la revendication 11.
